# EUROPEAN PATENT APPLICATION

(11) **EP 2 492 245 A1**
(43) Date of publication of application: **29.08.2012**
(21) Application number: 11190156.7
(22) Date of filing: 22.11.2011
(51) Int. Cl.: C03B 33/07, B26D 1/00, B32B 17/00

(54) **Machine for cutting glass sheets in general and laminated glass sheets in particular**

(30) Priority: 25.02.2011 IT MI20110285
(71) Applicant: Macotec S.R.L., 23010 Rogolo, (SO) (IT)
(72) Inventor: Colli, Maurizio, 23019 Traona SO (IT)
(74) Representative: Modiano, Micaela Nadia

(57) **Abstract**

A machine (1) for cutting glass sheets in general and laminated glass sheets in particular, comprising a supporting frame (2) which defines a supporting surface (3) for at least one sheet (4) being worked, which is provided with a fixed beam (5) and with a beam (10) which can move parallel to the resting surface of the sheet (4), the sheet (4) being worked being defined by at least two glass sheets (13, 14) which are mutually stacked with the interposition of a layer of plastics (15) and means (16) being also provided for trimming the layer of plastics (15) with respect to the perimeter of the glass sheets (13, 14), lower cutting means (8) and upper cutting means (7) being provided which are associated with at least one between the supporting frame (2) and the fixed beam (5) and a movable beam (10) being provided which is arranged on the opposite with respect to the fixed beam (5) with respect to the cutting plane (11) of the sheet (4) being worked for the clamping and separation of the cut part (31) thereof, the trimming means (16) being associated with the lower cutting means (8) and/or the upper cutting means (7) to trim the layer of plastic material (15) substantially at the cutting plane (11).

## Description

The present invention relates to a machine for cutting glass sheets in general and laminated glass sheets in particular.

As is known, machines for cutting laminated glass sheets typically perform the simultaneous incision of the lower and upper surfaces of the sheet, open the upper incision and the lower incision, and separate the two glass sheets, with heating and optional cutting of the film of plastics that is interposed between the two glass sheets.

Such processes are usually performed on an apparatus that has a worktable on which a fixed beam is provided which supports the grip means as well as the means for cutting the glass sheets.

Moreover, a movable beam is provided on which means are provided for clamping the sheet which act to move away the parts once the incision and opening of the sheets have been performed.

In greater detail, such movable beam is integral with the separation assembly and moves together with it in the direction of the plane of the sheet being worked.

In solutions of the known type, as a consequence of the sheet lamination process, the plastic film undergoes such deformations as to protrude laterally from the perimeter of the two glass sheets with a distance that can vary up to a maximum of 3 or 4 mm.

This excess film portion must be removed because inaccuracies in the operations for abutment of the glass and consequently in the final measurement of the cut part occur in cutting machines.

This excess is in fact such as to cause the measurement sensors or mechanical positioning and abutment devices to perform incorrect measurements along the edge of the film and not along the edge of the glass sheets, thus offsetting the final desired measurements of the cut glass.

In order to avoid this problem, the operator of the machine, before beginning the working of the sheet, removes manually the excess film by using blades (in the specific case cutters, blades, razor blades, etc.), with obvious risks of injury as well as waste of time.

In order to obviate these drawbacks, cutting machines have been devised which are provided with trimming means which are adapted to trim the portion of film that protrudes from the glass sheets.

For example, cutting machines are known which are provided with a blade system, which by advancing along the edge of the glass and by also having an oscillating motion which is perpendicular thereto, allows to cut the portion of protruding film, ensuring good cutting quality without inducing plastic deformations therein.

In greater detail, such blade system of the known type uses contrast wheels, which by resting against the edge of the glass sheet and by being mounted at a certain distance with respect to the blade preset the maximum protrusion of the film after cutting.

Disadvantageously, such blade system has an adapted table for moving the glass sheet as well as bridges which are independent of the cutting machine on which such blade system is applied and are installed ahead of the cutting region of the machine.

Another example of conventional cutting machine consists of machines provided with a removal device that is entirely similar to the one described previously and applicable within the cutting line for cutting the laminated glass.

In this case also, however, the removal device is located ahead of the cutting region of the laminated element and provides for the presence of two independent blades that act along two perpendicular sides of the sheet, one blade being fixed and arranged at the longer side, so as to be able to utilize the advancement motion of the sheet, and one being movable and arranged at the shorter side, i.e., the side that is parallel to the cutting plane.

In greater detail, both blades are mounted outside the bridges for cutting the laminated glass, entailing complications and installation costs which are not negligible, since adapted linear guiding systems must be provided.

Moreover, to ensure that they do not interfere with the sheet, the blades are arranged outside the cutting region, thus increasing the space occupation of the line, or must be provided with a vertical movement in order to be able to position them below the sheet, so as to allow the passage thereof.

In summary, conventional cutting machines, such as the ones described so far, suffer a common drawback, which resides in that the device for removing the excess film portion is arranged outside the machine proper and, more particularly, on a loading/feeding table or on a bridge of a monolithic glass cutting table, as in the case of combined cutting lines.

The aim of the present invention is to provide a machine for cutting glass sheets in general and laminated glass sheets in particular that solves the drawbacks cited above.

Within this aim, an object of the present invention is to provide a cutting machine that allows to trim the portion of plastic film that is interposed between two glass sheets simply and effectively, at the same time ensuring production costs which are low and economically advantageous if compared to those of the background art.

Another object of the present invention is to provide a cutting machine that avoids as much as possible the manual intervention of the operator.

Another object of the present invention is to provide a machine for cutting glass sheets in general and laminated glass sheets in particular which, thanks to its particular constructive characteristics, is capable of giving the greatest assurances of reliability and safety in use.

This aim, as well as these and other objects that will become better apparent hereinafter, are achieved by a machine for cutting glass sheets in general and laminated glass sheets in particular, comprising a supporting frame which defines a supporting surface for at least one sheet being worked, which is provided with a fixed beam, said sheet being worked being defined by at least two glass sheets which are stacked on each other with a layer of plastics interposed, means being further provided for trimming said layer of plastics with respect to the perimeter of said glass sheets and lower cutting means and upper cutting means being further provided which are associated with at least one between said supporting frame and said fixed beam, a movable beam being also provided which is arranged on the opposite side with respect to said fixed beam relative to the cutting plane of said sheet being worked in order to clamp and separate the cut part of said sheet being worked, characterized in that said trimming means are associated with the lower and/or upper cutting means in order to trim said layer of plastics substantially at said cutting plane.

Further characteristics and advantages will become better apparent from the description of a preferred but not exclusive embodiment of a machine for cutting glass sheets in general and laminated glass sheets in particular, illustrated by way of non limiting example in the accompanying drawings, wherein:
Figure 1 is a schematic side elevation view of a machine for cutting glass sheets in general and laminated glass sheets in particular, according to the present invention;
Figure 2 is a schematic side elevation view of the machine of Figure 1 during the trimming of the edge of the sheet being worked;

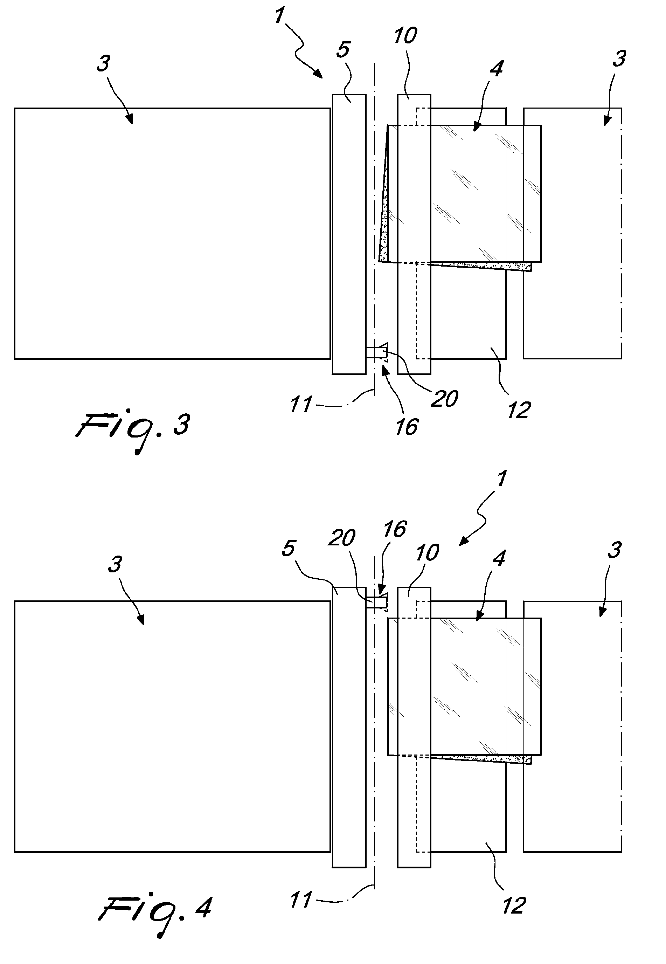

Figure 3 is a schematic plan view of the machine shown in Figure 1 at the beginning of the trimming of the edge of the sheet being worked;
Figure 4 is a schematic plan view of the machine shown in Figure 1 at the end of the trimming of the edge of the sheet being worked;
Figure 5 is an enlarged-scale view of a detail of the trimming means, according to the invention, during the trimming of the edge of the sheet being worked;
Figure 6 is a perspective view of the trimming means, according to the invention;

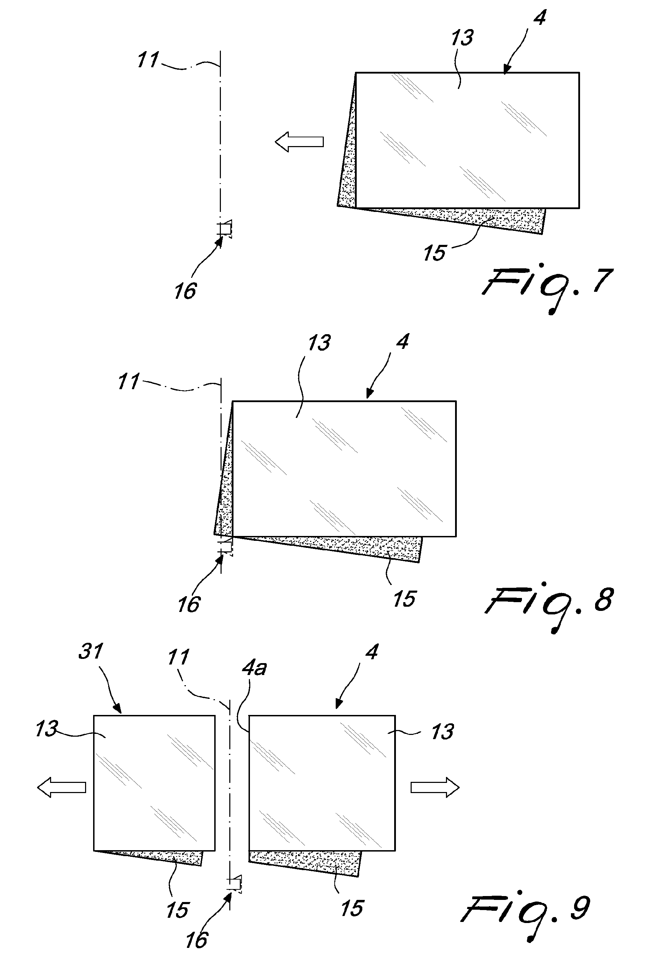

Figures 7 to 12 are schematic plan views of the machine according to the invention, illustrating the process for trimming the sheet being worked.

With reference to the figures, the machine for cutting glass sheets in general and laminated glass sheets in particular according to the invention, generally designated by the reference numeral 1, comprises a supporting frame 2, which defines a supporting surface 3 for a sheet 4 being worked.

A fixed beam 5 is provided, in a per se known manner, on the supporting frame 2 and is provided with means for removable retention of the sheet being worked, generally designated by the reference numeral 6.

Upper cutting means 7 and lower cutting means 8 are positioned correspondingly on the fixed beam 5 and on the supporting frame 2 and are per se known and therefore not described in detail.

A movable beam is also provided, designated by the reference numeral 10, which is arranged on the opposite side of the fixed beam 5 with respect to a cutting plane 11 and is integral in translational motion with a movable carriage 12 of the sheet 4 being worked, which is supported by the supporting frame 2 and is provided with means for translational motion along a line for movement in a direction which is substantially perpendicular to the cutting plane 11, in order to allow the clamping and separation of the cut part of the sheet 4 being worked.

In greater detail, the sheet 4 being worked is defined by at least two glass sheets 13 and 14 which are stacked together with the interposition of a layer of plastics 15, i.e., a film.

Advantageously, means 16 for trimming the film 15 with respect to the perimeter of the glass sheets 13 and 14 are further provided which, according to the invention, are associated with the lower cutting means 8 to trim the film 15 substantially at the cutting plane 11.

More specifically, the trimming means 16 comprise at least one trimming element 17 which is associated slidingly with the lower cutting means 8.

The trimming element 17 is movable with respect to the fixed beam 5 substantially along the cutting plane 11 by means of a slider 18 which is associated slidingly with the supporting frame 2 along a direction that is substantially parallel to the cutting plane 11.

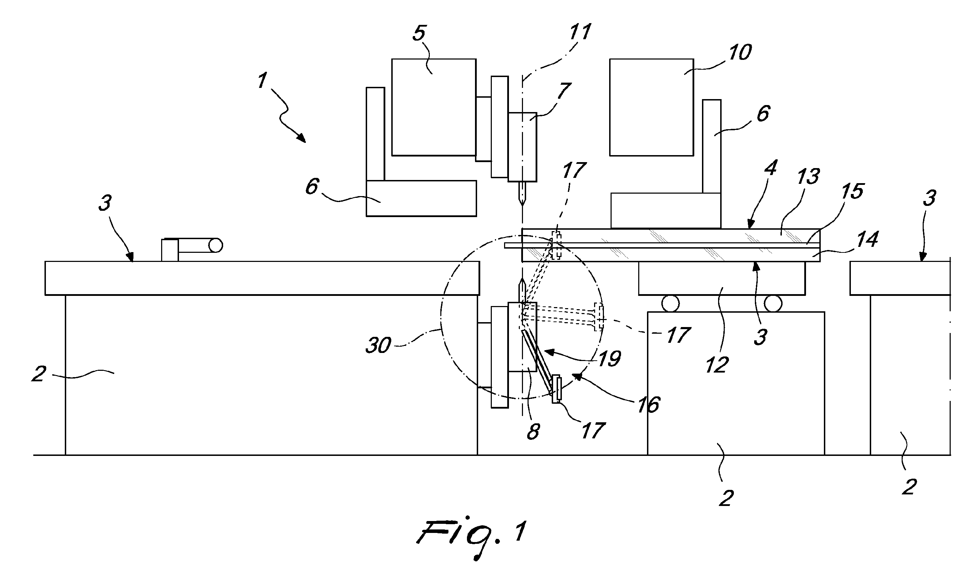

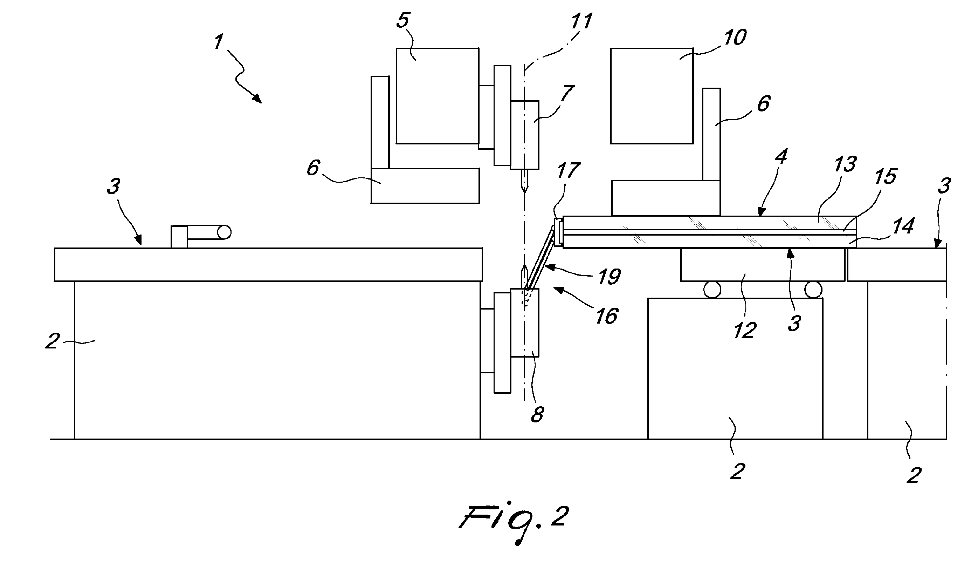

Translation means 19 are provided between the slider 18 and the trimming element 17 and are adapted for the movement of the latter with respect to the former from an inactive position, shown in Figure 1, in which the trimming element 17 is arranged below the region of action of the cutting means 7 and 8, to an active position, shown in Figure 2, in which the trimming element 17 is arranged in the region of action of the cutting means 7 and 8 substantially along the cutting plane 11.

More specifically, the translation means 19 comprise at least one articulated quadrilateral which is constituted by a supporting element 20 which supports the trimming element 17, a fixing plate 21 which is integral with the slider 18 and four rigid rods 22 and 23 which are opposite one another and are pivoted both to the supporting element 20 and to the fixing plate 21.

Advantageously, in order to keep the trimming element 17 constantly parallel to the transverse edge 4a to be trimmed of the sheet 4 being worked, the articulated quadrilateral defines a parallelogram.

In this manner it is possible to move the trimming element 17 along a circular path 30.

The movement of the articulated quadrilateral can be provided by way of motor means 24 which are integral with the slider 18 and are functionally associated with said articulated quadrilateral so as to allow the movement of the trimming element 17 with respect to the fixing plate 21.

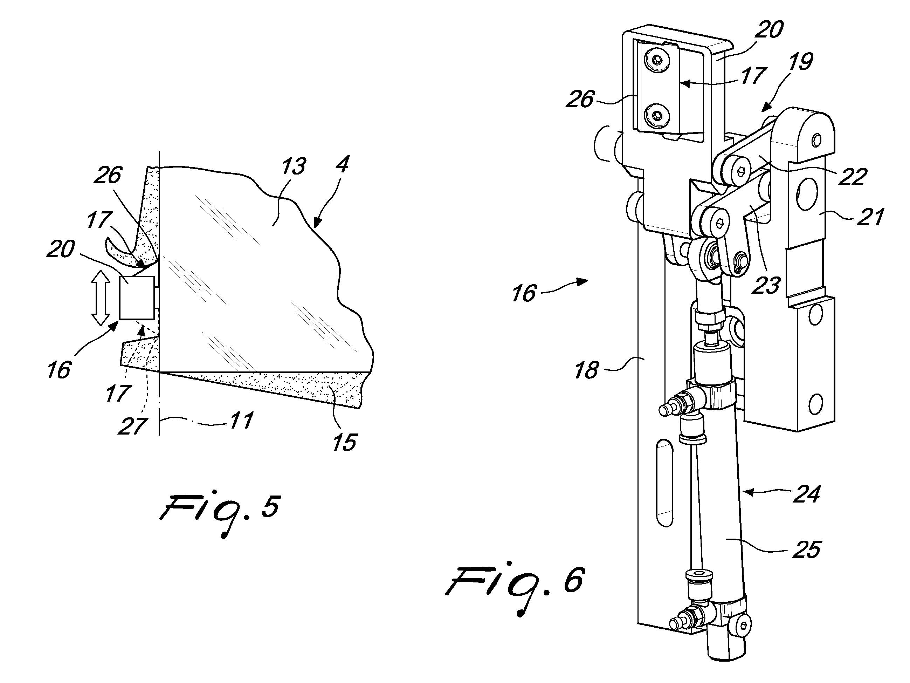

Advantageously, the motor means 24 comprise at least one pneumatic or hydraulic or electric actuator 25 which is pivoted at its ends, respectively, to the fixing plate 21 and to one of the two rigid rods 22 or 23, as shown in Figure 6.

As regards the trimming element 17, it comprises at least one blade which has a cutting profile 26 which is substantially perpendicular to the transverse edge 4a of the sheet 4 being worked and is substantially parallel to the cutting plane 11.

Conveniently, in order to position the cutting profile 26 at a preset distance from the transverse edge 4a to be trimmed, means for adjustment or simple sliding are provided, not shown, for the distance between the transverse edge 4a to be trimmed and the trimming element 17.

More precisely, said adjustment means, which can consist of a system of optical sensors or contact sensors, reference a portion of the transverse edge 4a that also has a portion of excess film 15.

In the case of simple sliding means, it is sufficient to provide the supporting element 20 with an antifriction coating so that if it comes into contact with the edge 4a of the sheets being worked no damage occurs.

Advantageously, the trimming element 17 can be supported rotatably by the supporting element 20 for the rotation of the cutting profile 26 through an angle of substantially 180° so as to allow the trimming of the film 15 both during the forward stroke of the slider 18 and during the return stroke thereof along the movable beam 10.

In this manner, the cutting profile 26 remains substantially perpendicular to the transverse edge 4a and substantially parallel to the cutting plane 11 both during the forward stroke and during the return stroke, ensuring a high quality of removal of the film 15.

As an alternative, in a possible variation, the trimming element 17 comprises at least two blades which have two cutting profiles 26 and 27 which are opposite one another and substantially perpendicular to the transverse edge 4a and are substantially parallel to the cutting plane 11 to trim the film 15 both during the forward stroke and during the return stroke of the slider 20 along the movable beam 10 or along the cutting plane 11, as shown in Figure 5.

Conveniently, the blades that define the cutting profiles 26 can be provided by thin and elastically flexible blades.

This flexibility is an important feature if the blade is moved into contact with the glass sheets 13 and 14. Due to the pressure caused by contact between the blades and the sheet 4 being worked, the blades in fact flex, adhering to the transverse edge 4a without damaging it.

Moreover, it is important that the trimming element 17 is provided with one of the two refinements described previously, since by improving the removal within the edge 4a and not specifically at its end due to evident problem in precise positioning, during the forward stroke only it is not possible to perform the complete removal of the film 15.

Operation of the machine 1 for cutting glass sheets in general and laminated glass sheets in particular is evident from what has been described.

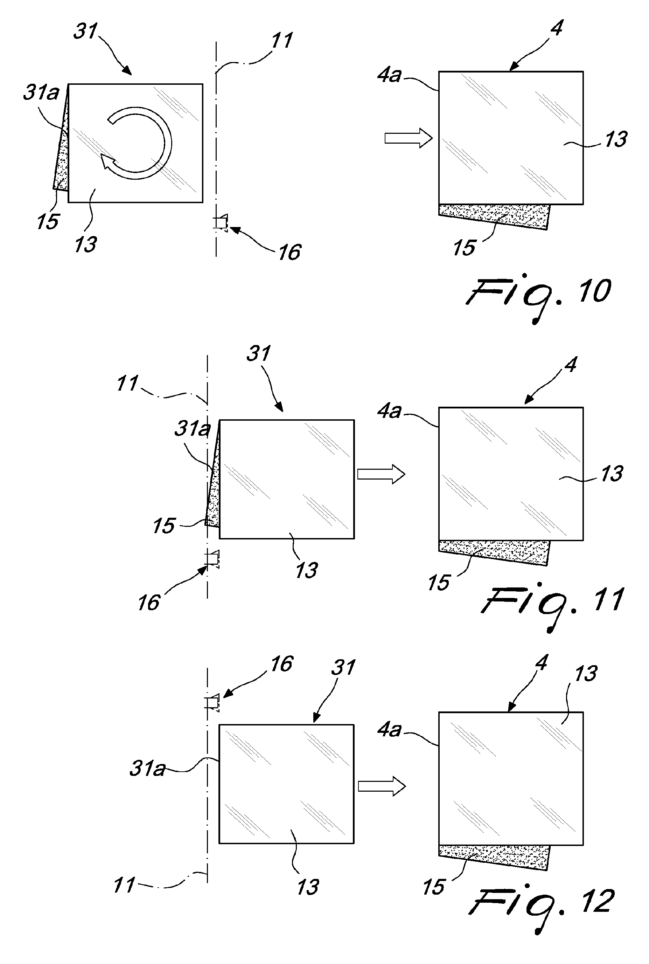

In particular, once a cut part 31 has been obtained, as shown in Figures 10 to 12, said part is rotated and positioned in the place of the remaining part 13 of the sheet 4 so that its edge 31a is substantially parallel to the cutting plane 11, repeating the trimming procedure on the edge 31a as well.

By repeating, if necessary, the operations described above also for the remaining edges of the sheet 4 and of the sheet 31, if necessary, laminated glass sheets to size which are completely trimmed on all of their edges are obtained.

Moreover, it should be noted that since mechanical devices are provided on the machine 1 that must be kept absolutely clean, such as for example guides, incision tools, cutting tools, heating lamp, etc., it is possible to provide suction means, not shown, which are adapted to aspirate the parts of the film 15 that have been removed, so as to be able to collect them in an adapted container.

It has been found in practice that the machine for cutting glass sheets in general and laminated glass sheets in particular according to the present invention achieves the intended aim and objects, since it allows to trim the laminated glass sheet by applying trimming means directly to components that are already present in conventional cutting machines.

Another advantage of the machine according to the present invention resides in that since a mechanism is provided for supporting the movement of the trimming element, said element can follow the shape of the edge to be trimmed even if it is arranged incorrectly on the supporting surface, compensating for any lack of parallelism between said edge to be trimmed and the cutting plane.

A further advantage of the machine according to the present invention linked to the mechanism for supporting the trimming element resides in that during the cutting or grinding operations of the sheet it is not necessary to disassemble or remove the trimming means but it is sufficient to arrange them in their inactive position.

More precisely, the constructive simplicity of the supporting mechanism of the trimming element allows to insert the latter within the machine, avoiding the need to position it outside it on other structures provided specifically for this purpose.

The machine for cutting glass sheets in general and laminated glass sheets in particular thus conceived is susceptible of numerous modifications and variations, all of which are within the scope of the appended claims.

For example, instead of having a single actuator which is adapted to move the blades along a substantially circular path, it is possible to provide independent actuators dedicated to the movement of said blades along a horizontal direction and a vertical direction.

Without abandoning the described previous inventive concept, the trimming means can be applied to the upper cutting carriage instead of to the lower cutting carriage as shown in the figures or it is possible to provide first trimming means dedicated to the trimming of the film in a forward direction and second trimming means dedicated to the trimming of the film in a return direction.

All the details may further be replaced with other technically equivalent elements.

In practice, the materials used, so long as they are compatible with the specific use, as well as the contingent shapes and dimensions, may be any according to requirements.

The disclosures in Italian Patent Application No. MI2011A000285 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine (1) for cutting glass sheets in general and laminated glass sheets in particular, comprising a supporting frame (2) which defines a supporting surface (3) for at least one sheet (4) being worked, which is provided with a fixed beam (5), said sheet (4) being worked being defined by at least two glass sheets (13, 14) which are stacked on each other with a layer of plastic material (15) interposed, means (16) being further provided for trimming said layer of plastic material (15) with respect to the perimeter of said glass sheets (13, 14) and lower cutting means (8) and upper cutting means (7) being further provided which are associated with at least one between said supporting frame (2) and said fixed beam (5), a movable beam (10) being also provided which is arranged on the opposite side with respect to said fixed beam (5) relative to the cutting plane (11) of said sheet (4) being worked in order to clamp and separate the cut part (13) of said sheet (4) being worked, **characterized in that** said trimming means (16) are associated with said lower cutting means (8) and/or said upper cutting means (7) in order to trim said layer of plastic material (15) substantially at said cutting plane (11).

2. The machine (1) according to claim 1, **characterized in that** said trimming means (16) comprise at least one trimming element (17), which is associated slidingly with said lower cutting means (8) and/or said upper cutting means (7) and can move with respect to said fixed beam (5) substantially along said cutting plane (11) by means of a slider (18), which is associated slidingly with said fixed beam (5) along a direction which is substantially parallel to said cutting plane (11).

3. The machine (1) according to one or more of the preceding claims, **characterized in that** it comprises means (19) for the translational motion of said trimming element (17) with respect to said slider (18) for moving said trimming element (17) from a position from an inactive position, in which said trimming element (17) is arranged below the region of action of said lower cutting means (8) and/or said upper cutting means (7), to an active position, in which said trimming element (17) is arranged in said region of action of said lower cutting means (8) and/or said upper cutting means (7) substantially along said cutting plane (11).

4. The machine (1) according to one or more of the preceding claims, **characterized in that** said translation means (19) comprise at least one articulated quadrilateral, which is constituted by a supporting element (20), which supports said trimming element (17), a fixing plate (21), which is jointly connected in translation to said slider (18), and four rigid rods (22, 23), which are mutually opposite and are pivoted both to said supporting element (20) and to said fixing plate (21), said articulated quadrilateral defining a parallelogram for keeping said trimming element (17) constantly parallel to the transverse edge (4a, 31 a) to be trimmed of said sheet (4) being worked.

5. The machine (1) according to one or more of the preceding claims, **characterized in that** said trimming element (17) comprises at least one blade which has a cutting profile (26) which is substantially perpendicular to said transverse edge (4a, 31a) and is substantially parallel to said cutting plane (11).

6. The machine (1) according to one or more of the preceding claims, **characterized in that** said trimming element (17) is supported rotatably by said supporting element (20) for the rotation of said cutting profile (26) through an angle substantially equal to 180° in order to trim said layer of plastic material (15) both during the forward stroke of said slider element (18) and during the return stroke of said slider (18) along said movable beam (10), said cutting profile (26) being substantially perpendicular to said transverse edge (4a, 31a) and substantially parallel to said cutting plane (11) both during said forward stroke and during said return stroke.

7. The machine (1) according to one or more of the preceding claims 1 to 5, **characterized in that** said trimming element (17) comprises at least two blades which have two mutually opposite cutting profiles (26, 27), which are substantially perpendicular to said transverse edge (4a, 31a) and are substantially parallel to said cutting plane (11) in order to trim said layer of plastic material (15) both during the forward stroke of said slider (18) and during the return stroke of said slider (18) along said movable beam (10).

8. The machine (1) according to one or more of the preceding claims, **characterized in that** it comprises means for adjusting the distance between said transverse edge (4a, 31a) to be trimmed and said trimming element (17) in order to arrange said cutting profile (26, 27) at a preset distance from said transverse edge (4a, 31a) to be trimmed.

9. The machine (1) according to one or more of the preceding claims, **characterized in that** it comprises motor means (24) which are integral with said slider (18) and are functionally associated with said articulated quadrilateral for the movement of said trimming element (17) with respect to said fixing plate (21).

10. The machine (1) according to one or more of the preceding claims, **characterized in that** said motor means (24) comprise at least one oil-pressure controlled or pneumatic or hydraulic or electric actuator (25) which is pivoted at its ends respectively to said fixing plate (21) and to one of said two rigid rods (23).
